# EUROPEAN PATENT APPLICATION

(11) **EP 4 528 330 A1**
(43) Date of publication of application: **26.03.2025**
(21) Application number: 23807678.0
(22) Date of filing: 17.05.2023
(51) Int. Cl.: G01S 17/894, G01S 7/4863, G01S 17/10

(54) **TOF CAMERA, VEHICULAR SENSING SYSTEM, AND VEHICLE LAMP FITTING**

(30) Priority: 18.05.2022 JP 2022081841
(71) Applicant: Koito Manufacturing Co., Ltd., Tokyo 141-0001 (JP)
(72) Inventor: HARADA Tomoaki, Shizuoka-shi, Shizuoka 424-8764 (JP)
(74) Representative: Grünecker Patent- und Rechtsanwälte PartG mbB
(86) International application number: PCT/JP2023/018488
(87) International publication number: WO 2023/224077

(57) **Abstract**

In a multi-tap type image sensor (120), each pixel includes n (n≥2) floating diffusion (FD) regions, and exposure is possible with different timings for each FD region. A camera controller (130) (i) performs sensing successively across m (m≥2) zones from the front to the rear, in units of one zone including n consecutive ranges. Further, (ii) when sensing each zone, an ith (1≤i≤n) FD region of the image sensor (120) is exposed by reflected light from the ith range of said zone. An arithmetic processing device (140) corrects a pixel value of the ith (1≤i≤n) FD region of a jth (2≤j≤m) zone using information obtained in a (j-1)th zone, to generate a range image of the ith range of the jth zone.

## Description

### TECHNICAL FIELD

The present disclosure relates to a ToF imaging camera, a vehicle sensing system, and a vehicle lamp.

### BACKGROUND ART

An object identification system that senses the position and the kind of an object existing in the vicinity of the vehicle is used for autonomous driving or for autonomous control of light distribution of the headlamp. The object identification system includes a sensor and a processing device configured to analyze an output of the sensor. The sensor is selected from among cameras, LiDAR (Light Detection and Ranging, Laser Imaging Detection and Ranging), millimeter-wave radars, ultrasonic sonars, etc., giving consideration to the application, required precision, and cost.

It is not possible to obtain depth information from a typical monocular camera. Accordingly, it is difficult to separate multiple objects at different distances even when the multiple objects overlap.

As a camera capable of acquiring depth information, a ToF imaging camera is known. The ToF (Time Oof Flight) camera is configured to project infrared light by a light emitting device, to measure the time of flight until the reflected light returns to the image sensor, and to obtain a ToF image obtained by converting the time of flight into distance information.

### CITATION LIST

### PATENT LITERATURE

Patent Document 1:JP-A-2009-257981
Patent Document 2: International Publication WO2017/110417A1

### SUMMARY OF INVENTION

### TECHNICAL PROBLEM

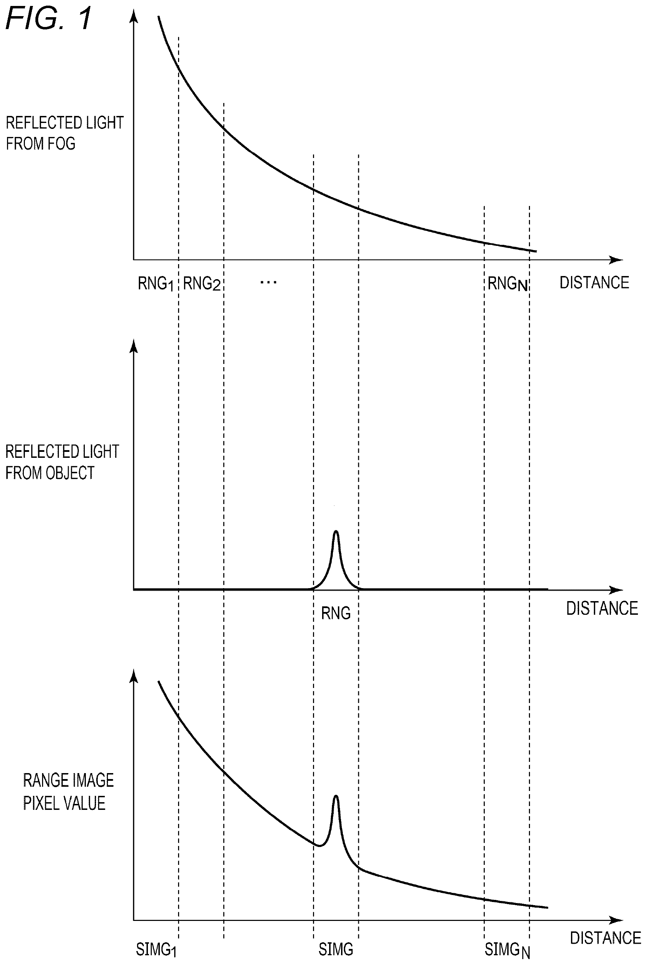

In a case in which fog exists in the field of view, the image sensor of the ToF imaging camera receives reflected light from the fog as well as reflected light from the object. Fig. 1 is a diagram for explaining sensing in fog. The horizontal axis in FIG. 1 represents the distance from the ToF imaging camera. Fig. 1 shows, from the top, the reflection intensity from the fog, the reflection intensity from the object, and the pixel value of one pixel in the range image.

The pixel value of the image sensor is determined by the sum of the reflected light from the fog and the reflected light from the object. As the propagation distance becomes longer, the light attenuates. Accordingly, the reflected light intensity from the fog becomes higher as the range becomes nearer to the ToF imaging camera, and becomes lower as the range becomes farther to the ToF imaging camera.

Directing attention to the range RNGᵢ in which the object is positioned, the pixel values of the corresponding range image SIMGᵢ include fog as the noise component. This leads to a decrease in contrast.

Furthermore, when the fog is dark, there may be a situation in which the pixel values of the range image SIMG₁ in a range near the ToF imaging camera become larger than the pixel values of the range image SIMGᵢ in the range RNGᵢ in which the object is positioned. Description will be made below assuming that multiple range images are combined so as to generate a single image (i.e., a normal image). In this case, when the pixel values of the near-range ranges are larger than the pixel values of the ranges in which an object exists, this leads to the object being buried in the fog so as to be invisible.

It is an exemplary purpose of the present disclosure to provide a ToF imaging camera, a vehicle sensing system, and a vehicle lamp capable of capturing an image with reduced effects of fogging.

### SOLUTION TO PROBLEM

An aspect of the present disclosure relates to a ToF imaging camera configured to divide the field of view in the depth direction into multiple ranges, and to generate multiple range images that correspond to the multiple ranges. The ToF imaging camera includes an illumination apparatus, a multi-tap image sensor, a camera controller, and a processing device. The illumination apparatus emits pulsed illumination light in the field of view. The multi-tap image sensor has n (n ≥ 2) FD (Floating Diffusion) regions for each pixel and is capable of exposure at different timings for each FD region. The camera controller controls the light emission timing of the illumination apparatus and the exposure timing of the image sensor. The processing device generates multiple range images based on an output of the image sensor. The camera controller controls the illumination apparatus and the image sensor so as to (i) sense m (m ≥ 2) zones in the order from the near side to the far side in units of one zone including n consecutive ranges, and (ii) in sensing for each zone, expose the i-th (1 ≤ i ≤ n) FD region of the image sensor by the reflected light from the i-th range of this zone. The processing device corrects the pixel values of the i-th (1 ≤ i ≤ n) FD region of the j-th (2 ≤ j ≤ m) zone using the information acquired in the j-1-th zone, and generates a range image for the i-th range of the j-th zone.

### ADVANTAGEOUS EFFECT OF THE INVENTION

According to an aspect of the present disclosure, this allows the influence of fogging to be reduced.

### BRIEF DESCRIPTION OF DRAWINGS

[FIG. 1] Fig. 1 is a diagram for explaining sensing in fog.
[FIG. 2] Fig. 2 is a block diagram showing a sensing system according to the embodiment.
[FIG. 3] Fig. 3 is a diagram for explaining the basic operation of the ToF imaging camera.
[FIG. 4A] Fig. 4A is a diagram for explaining a range image generated by a ToF imaging camera.
[FIG. 4B] Fig. 4B is a diagram for explaining a range image generated by the ToF imaging camera.
[FIG. 5] Fig. 5 is a diagram for explaining sensing in one zone.
[FIG. 6] Fig. 6 is a diagram for explaining the generation of the range image by the processing device.
[FIG. 7] Fig. 7 is a diagram for explaining a range image generated by a processing device.
[FIG. 8] Fig. 8 is a block diagram showing the sensing system.
[FIG. 9A] Fig. 9A is a diagram showing an automobile provided with a ToF imaging camera.
[FIG. 9B] Fig. 9B is a diagram showing an automobile provided with the ToF imaging camera.
[FIG. 10] Fig. 10 is a block diagram showing a vehicle lamp provided with the sensing system.

### DESCRIPTION OF EMBODIMENTS

### SUMMARY OF EMBODIMENTS

Description will be made regarding a summary of some exemplary embodiments of the present disclosure. The summary is provided as a prelude to the detailed description that will be described later, and is intended to simplify the concepts of one or more embodiments for the purpose of basic understanding of the embodiments. It is not intended to limit the scope of the present invention or the disclosure. This summary is not an extensive overview of all possible embodiments. It is not intended to restrict essential components of the embodiments. For convenience, [an embodiment] may be used to refer to a single embodiment or multiple embodiments as disclosed in this specification. The embodiments include examples and modifications.

The ToF imaging camera according to the embodiment is configured to divide the field of view in the depth direction into multiple ranges, and to generate multiple range images that correspond to the multiple ranges. The ToF imaging camera includes an illumination apparatus, a multi-tap image sensor, a camera controller, and a processing device. The illumination apparatus emits pulsed illumination light in the field of view. The multi-tap image sensor has n (n ≥ 2) FD (Floating Diffusion) regions for each pixel and is capable of exposure at different timings for each FD region. The camera controller controls the light emission timing of the illumination apparatus and the exposure timing of the image sensor. The processing device generates multiple range images based on an output of the image sensor. The camera controller controls the illumination apparatus and the image sensor so as to (i) sense m (m ≥ 2) zones in the order from the near side to the far side in units of one zone including n consecutive ranges, and (ii) in sensing for each zone, expose the i-th (1 ≤ i ≤ n) FD region of the image sensor by the reflected light from the i-th range of this zone. The processing device corrects the pixel values of the i-th (1 ≤ i ≤ n) FD region of the j-th (2 ≤ j ≤ m) zone using the information acquired in the j-1-th zone, and generates a range image for the i-th range of the j-th zone.

In a case in which fog exists, when viewed for each zone, the zone nearer than the ToF imaging camera includes more reflected light of the fog than in the far-distance zone. The reflected light from the fog continuously attenuates according to the distance. Accordingly, it can be said that the influence of the fog of the current zone to be sensed is close to the influence of the fog of the zone in front of the current zone that has been sensed. With the above configuration, by use of this property, the effect of fog can be reduced by estimating the effect of fog in the current zone using the sensing results of the zone in front of the current zone, and by performing the correction using the estimated effect of fog.

In an embodiment, the processing device may generate the i-th range image of the j-th zone by subtracting the pixel values of the n-th FD region in the j-1-th zone from the pixel values of the i-th (1 ≤ i ≤ n) FD region of the j-th zone.

The pixel value of the n-th FD region in the zone in the front of the current zone includes the information with respect to the fog in the range that is the nearest to the current zone from among the zones. Accordingly, the pixel values of the n-th FD region of the previous zone are subtracted from the pixel values of the n-th FD region of the current zone. This allows the influence of fog to be reduced by simple calculation.

In an embodiment, the processing device may combine the n × m range images so as to generate a single combined image.

In an embodiment, each pixel of the combined image may be generated based on a maximum value from among the corresponding pixels of the n × m range images.

With an embodiment, in a situation in which no fog exists, the processing device may not need to perform correction.

### EMBODIMENTS

Description will be made with reference to the drawings regarding preferred embodiments. The same or similar components, members, and processes are denoted by the same reference numerals, and redundant description thereof will be omitted as appropriate. The embodiments have been described for exemplary embodiments, and are by no means intended to restrict the present invention. In addition, it is not necessarily essential for the present invention that all the features or a combination thereof be provided as described in the embodiments.

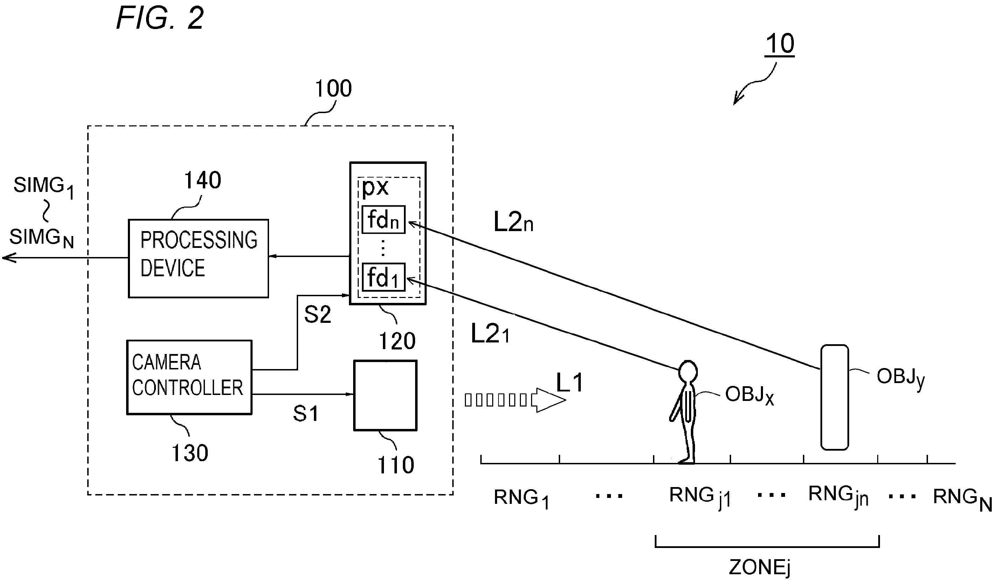

Fig. 2 is a block diagram showing a sensing system 10 according to the first embodiment. The sensing system 10 is mounted on a vehicle such as an automobile, motorcycle, or the like. The sensing system 10 detects an object OBJ that exists in the vicinity of the vehicle (within the field of view of the sensor).

The sensing system 10 mainly includes a ToF imaging camera 100. The ToF imaging camera 100 includes an illumination apparatus 110, an image sensor 120, a camera controller 130, and a processing device 140. The ToF imaging camera 100 captures images for a plurality of N (N ≥ 2) ranges RNG1 through RNGN divided in the depth direction. The ranges may be designed such that adjacent ranges overlap at their boundaries in the depth direction.

The illumination apparatus 110 emits pulsed illumination light L1 in front of the vehicle in synchronization with a light emission timing signal S1 supplied from the camera controller 130. Preferably, the pulsed illumination light L1 is infrared light. However, the pulsed illumination light L1 may be visible light or ultraviolet light having a predetermined wavelength.

The image sensor 120 includes multiple light-receiving pixels px, is capable of exposure control in synchronization with the exposure timing signal S2 supplied from the camera controller 130, and generates an image including multiple pixels. The image sensor 120 is sensitive to the same wavelength as that of the pulsed illumination light L1. The image sensor 120 captures an image of reflected light (returned light) L2 reflected by the object OBJ.

The camera controller 130 controls the emission timing (light emission timing) of the pulsed illumination light L1 by the illumination apparatus 110 and the exposure timing by the image sensor 120. The functions of the camera controller 130 may be implemented by software processing. Also, the function of the camera controller 130 may be implemented by hardware processing, or by a combination of software processing and hardware processing. Specifically, the software processing is implemented as a combination of a processor (hardware component) such as a CPU (Central Processing Unit), MPU (Micro Processing Unit), microcontroller, or the like, and a software program to be executed by the processor (hardware component). It should be noted that the camera controller 130 may be configured as a combination of multiple processors and software programs. Specifically, the hardware process is implemented by hardware such as an ASIC (Application Specific Integrated Circuit), controller IC, FPGA (Field Programmable Gate Array), or the like.

The image (range image) SIMGᵢ generated by the image sensor 120 is input to the processing device 140. The processing device 140 processes the multiple range images SIMG₁ through SIMG_{N} acquired for the multiple ranges RNG₁ through RNG_{N} based on the output of the image sensor 120, so as to generate final output data CAMERAOUT. For example, the output data CAMERAOUT includes a set of multiple range images SIMG₁ through SIMG_{N}. Furthermore, in the present embodiment, the output data CAMERAOUT may include a normal image NIMG similar to that captured by an ordinary camera.

The processing device 140 may be configured as the same hardware component as that of the camera controller 130. Otherwise, the processing device 140 may be configured as a separate hardware component. Alternatively, some or all of the functions of the processing device 140 may be implemented as a processor or a digital circuit built into the same module as that of the image sensor 120.

The above is the basic configuration of the ToF imaging camera 100. Next, description will be made regarding the operation of the sensing system 400.

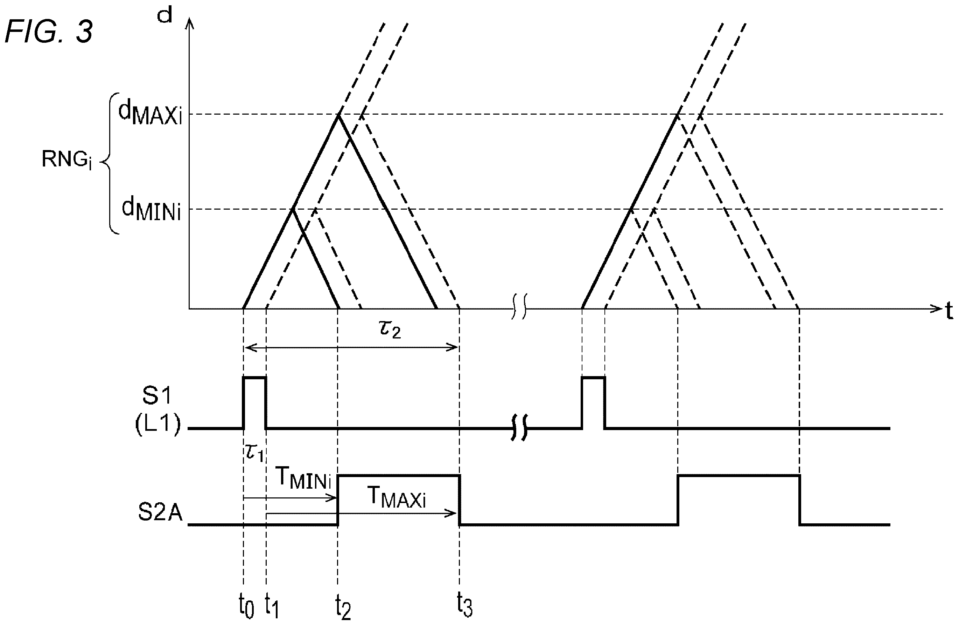

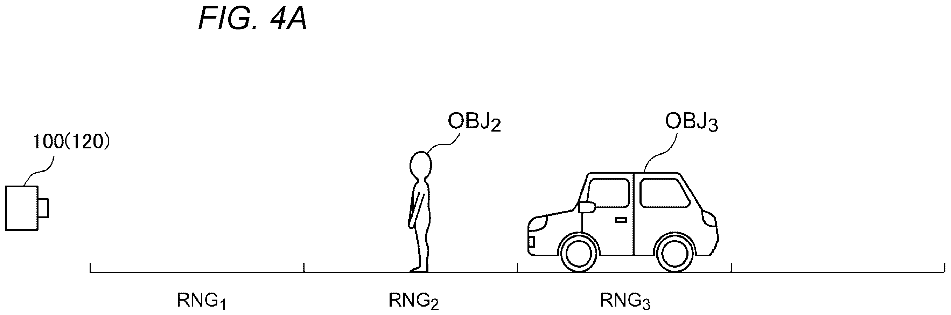

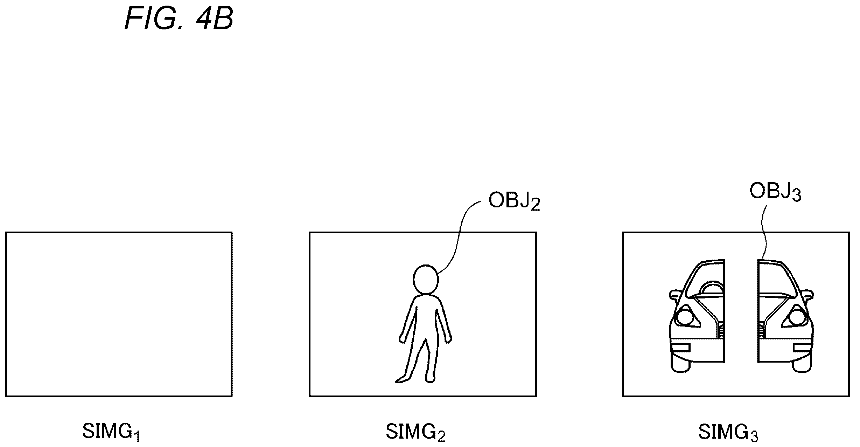

Fig. 3 is a diagram for explaining the basic operation of the ToF imaging camera. Fig. 3 shows the operation when the i-th range RNGᵢ is sensed. The illumination apparatus 110 emits light during a light-emitting period τ₁ from the time points tₒ to t₁ in synchronization with the light emission timing signal S1. In the upper diagram of Fig. 4, a light beam diagram is shown with the horizontal axis as time and with the vertical axis as distance. The distance between the ToF imaging camera 100 and the near-distance boundary of the range RNGᵢ is represented by d_{MINi}. The distance between the ToF imaging camera 100 and the far-distance boundary of the range RNGᵢ is represented by d_{MAXi}.

The round-trip time T_{MINi}, which is a period from the departure of light from the illumination apparatus 110 at a given time point, to the arrival of the light at the distance d_{MINi}, up to the return of the reflected light to the image sensor 120, is represented by T_{MINi} = 2 × d_{MINi}/c. Here, c represents the speed of light.

Similarly, the round-trip time T_{MAXi}, which is a period from the departure of light from the illumination apparatus 110 at a given time point, to the arrival of the light at the distance d_{MAXi}, up to the return of the reflected light to the image sensor 120, is represented by T_{MAXi} = 2 × d_{MAXi}/c.

When only an image of an object OBJ included in the range RNGᵢ is to be captured, the camera controller 130 generates the exposure timing signal S2 so as to start the exposure at the time point t₂=t₀+T_{MINi}, and so as to end the exposure at the time point t₃=t₁+T_{MAXi}. This is a single sensing operation.

The sensing of the i-th range RNGᵢ includes multiple sets of light emission and exposure. The camera controller 130 repeats the above-described sensing operation multiple times with a predetermined period τ₂.

As will be described in detail later, the image sensor 120 is capable of multiple exposures, and multiple reflected light beams acquired as a result of multiple pulse light emissions are multiple-exposed in the FD region (charge storage region) for each pixel px, so as to generate a single range image SIMG.

Figs. 4A and 4B are diagrams for explaining a range image generated by the ToF imaging camera 100. Fig. 4A shows an example in which an object (pedestrian) OBJ₂ exists in the range RNG₂, and an object (vehicle) OBJ₃ exists in the range RNG₃. Fig. 4B shows multiple range images SIMG₁ through SIMG₃ acquired in the situation shown in Fig. 4A. When the range image SIMG₁ is captured, the image sensor is exposed by only the reflected light from the range RNG₁. Accordingly, the image SIMG₁ includes no object image.

When the range image SIMG₂ is captured, the image sensor is exposed by only the reflected light from the range RNG₂. Accordingly, the range image SIMG₂ includes only the object OBJ₂. Similarly, when the range image SIMG₃ is captured, the image sensor is exposed by only the reflected light from the range RNG₃. Accordingly, the range image SIMG₃ includes only the object OBJ₃. As described above, the ToF imaging camera 100 is capable of capturing object images in the form of separate images for the respective ranges.

After all the ranges RNG₁ through RNG_{N} are sensed, the multiple slice images SIMG₁ through SIMG_{N} are combined. This allows an image (normal image) similar to that captured by an ordinary camera to be generated. However, in this case, a very long time is required to generate a single normal image.

Turning back to Fig. 2, the image sensor 120 is configured as a multi-tap type image sensor having at least n FD regions f_{d1} through fdₙ for each pixel. The image sensor 120 is capable of exposure control for each FD region fd. That is to say, the n FD regions in the pixel can be exposed at different timings.

The camera controller 130 controls the illumination apparatus 110 and the image sensor 120 so as to perform sensing as described below.
(i) The sensing is executed in units of zone ZONE. Specifically, m (m ≥ 2) zones are sensed in the order from the near side toward the far side. Each zone ZONEj (1 ≤ j ≤ m) includes n consecutive ranges RNGⱼ₁ through RNGⱼₙ.
(ii) In the sensing of the respective zones ZONEj, the i-th (1 ≤ i ≤ n) FD region fdᵢ of the image sensor 120 is exposed by the reflected light from the i-th range RNGⱼᵢ of the zone ZONEj.

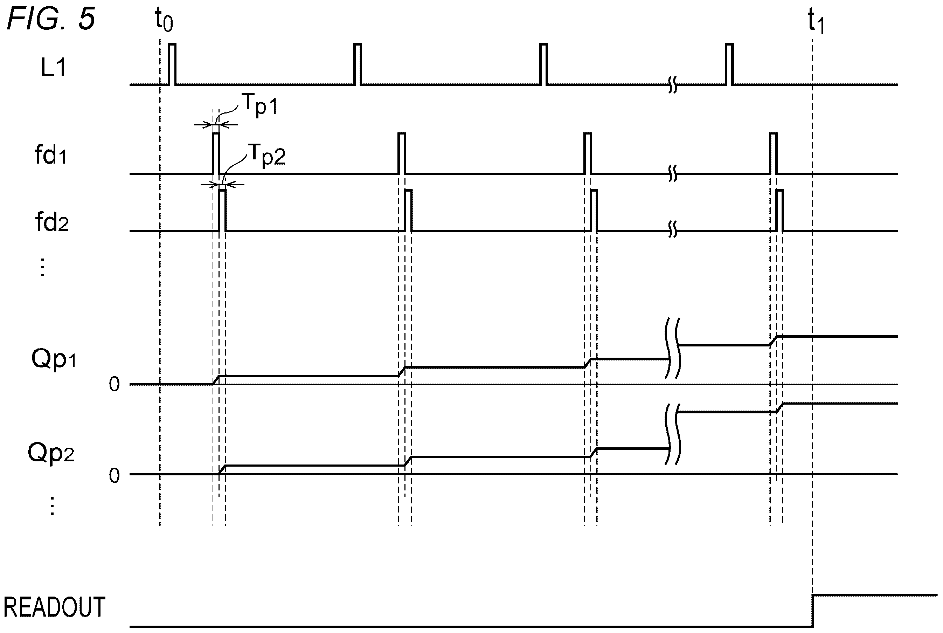

Fig. 5 is a diagram for explaining sensing in one zone.

Under the control of the camera controller 130, the illumination apparatus 110 repeatedly irradiates the pulsed illumination light L1 in the field of view. Under the control of the camera controller 130, the image sensor 120 performs multiple exposures of the FD region fd by the reflected light L2 from the field of view. In the time chart, a high value of L1 represents light emission of pulsed illumination light. Also, the high values of the f_{d1} and the fd₂ indicate the exposure of the respective FD regions. In addition, Tp1, Tp2 ... indicate the exposure durations of the FD regions f_{d1}, fd₂ . .

The pixel includes, in addition to the multiple FD regions, a light receiving element such as a photodiode or the like. Each FD region is exclusively connected to the light-receiving element in the exposure period. Also, Qp₁, Qp₂ ... represent the amounts of charges of the FD regions f_{d1}, fd₂ . . The exposure timings of the FD regions f_{d1}, fd₂, ... are determined according to the position of the range to be captured.

In order to provide sufficiently bright range images in the ranges RNGⱼ₁ through RNGⱼₙ, sufficient amounts of charges must be stored in the FD regions f_{d1}, fd₂, ... For this purpose, the pulsed illumination light L1 and the exposures in the FD regions f_{d1} through fdₙ need to be repeated for several hundred to several hundreds of thousands of times.

Description will be made assuming that the image sensor 120 is configured to allow multiple FD regions of fd₁ through fdₙ to be read out only at the same timing. That is to say, description will be made assuming that, when the data is read once, the charges in the multiple FD regions are reset. In this case, when the one-zone sensing is completed at the time point t₁, the charge amounts Qp₁ through Qpₙ of the FD regions fd₁ through fdₙ are digitized and read out as pixel values.

The camera controller 130 senses the zones ZONE from the near-distance zone ZONE1 through the far-distance zone ZONEm in this order according to a similar sequence.

Turning back to Figs. 4A and 4B, after the exposure of one zone ZONEj is completed, the processing device 140 corrects the pixel values of the i-th (1 ≤ i ≤ n) FD region fdᵢ of the j-th (2 ≤ j ≤ m) zone ZONEj using the information acquired in the previously sensed j-1-th zone ZONEj-1. This generates the range images SIMGⱼᵢ for the i-th range RNGⱼᵢ of the j-th zone ZONEj.

In an example, the processing device 140 generates the range images SIMGⱼᵢ of the i-th range RNGⱼᵢ of the j-th zone ZONEj by subtracting the pixel values of the n-th FD region fdₙ of the j-1th zone from the pixel values of the i-th (1 ≤ i ≤ n) FD region fdᵢ of the j-th zone ZONEj. It should be noted that, since there is no negative pixel value, when the subtraction result becomes negative, this can be represented by 0.

With respect to the first zone ZONE1, there is no zone in front of the first zone ZONE1. Accordingly, the values of the FD regions f_{d1} through fdₙ may be corrected using the value of the first FD region f_{d1} of the first zone ZONE1.

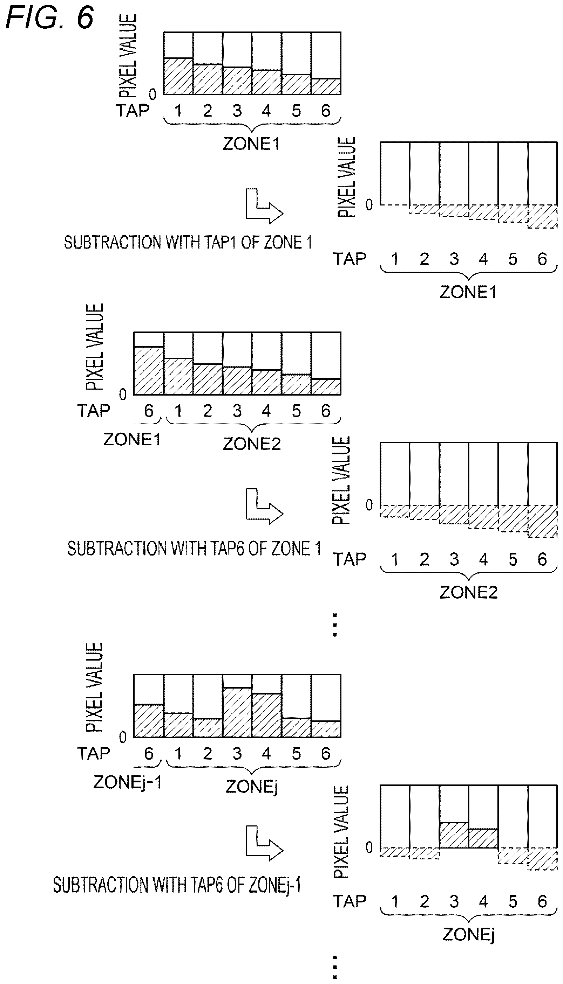

Fig. 6 is a diagram for explaining the generation of the range image by the processing device 140.

Description will be made below regarding the generation of the range image SIMG with n = 6, with respect to the first zone ZONE1, the second zone ZONE2, and the j-th zone ZONEj in which an object exists. The taps TAP1 through TAP6 represent pixel values of the FD region in each zone. It should be noted that the scale of the pixel values is changed as appropriate for ease of understanding.

With respect to the first zone, the pixel values of the taps TAP1 through TAP6 can be corrected using the first pixel value TAP1. Specifically, the TAP1 through TAP6 can be corrected by subtracting the value of TAP1. The corrected value of the tap TAP1 becomes zero. The other taps TAP2 through TAP6 have a negative value; however, in this case, the values of the taps TAP2 through TAP6 become zero.

The range images SIMG₁₁ through SIMG₁₆ are generated using the corrected values of the taps TAP1 through TAP6.

With respect to the second zone ZONE2, the pixel values of the taps TAP1 through TAP6 are corrected by subtracting the last tap TAP6 of the zone ZONE1 in front of the zone ZONE2. In a case in which the corrected value is zero, the value becomes zero. The range images SIMG₂₁ through SIMG₂₆ are generated using the corrected values of the taps TAP1 through TAP6.

With respect to the j-th zone ZONEj, the pixel values of the taps TAP1 through TAP6 are corrected by subtracting the last tap TAP6 of the zone ZONEj-1 in front of the j-th zone ZONEj. The values of the third and fourth taps have almost no effect on fog. They represent reflected light from the object. The range images SIMG ⱼ₁ through SIMG ⱼ₆ are generated using the corrected values of the taps TAP1 through TAP6.

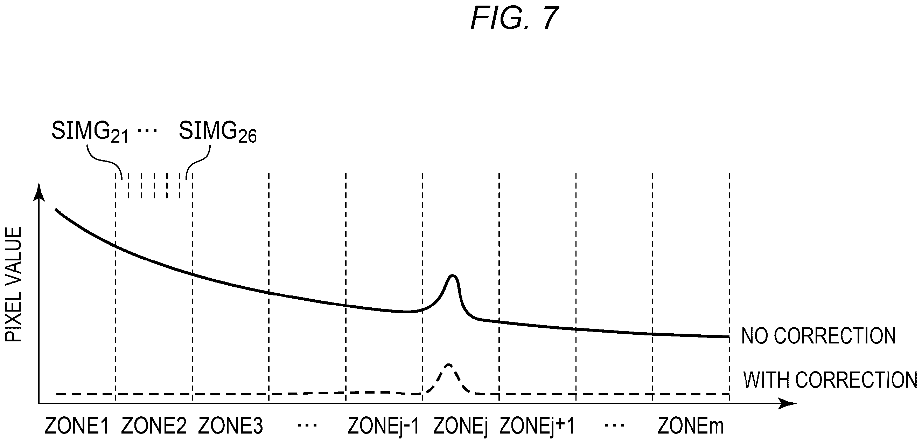

Fig. 7 is a diagram for explaining the range image SIMG generated by the processing device 140. Fig. 7 shows a range image SIMG obtained by correction and a range image SIMG obtained in a case in which correction is not executed.

With such a correction, from the range image SIMG ⱼᵢ, it can be seen that the effect of fog can be suitably removed.

The effect of this correction becomes even more pronounced when the multiple range images SIMG are combined so as to generate a single normal image.

In an example, the processing device 140 combines the N = n × m range images so as to generate a single normal image NING (combined image). The normal image NIMG includes the information of all the objects in the field of view as with an image captured by a typical camera.

The processing device 140 compares the corresponding pixels of the N = n × m range images, and sets the maximum value of the pixels as the pixel value of the corresponding pixel of the normal pixel NING. In a case in which correction is not executed, the value of the range image SIMG₁₁ is the largest. This leads to loss of object data. In contrast, in a case in which the range images SIMG generated by the correction are combined, the pixel values of the range images including the object become maximum. Accordingly, the effect of fog is removed, thereby allowing a clear normal image NIMG to be generated.

The correction by the processing device 140 may always be executed. However, in a case in which no fog exists, this leads to useless calculation, which consumes useless power. In order to solve such a problem, in a situation in which no fog exists, the value of the FD region fdᵢ generated for each zone ZONEj may be employed as the pixel value of the range image SIMG ⱼᵢ as it is without correction by the processing device 140.

### (MODIFICATION)

The above-described embodiments have been described for exemplary purposes only. It will be understood by those skilled in this art that various modifications may be made to the respective components thereof or the combination of the respective processing processes. Description will be made below regarding such a modification.

In the embodiment, the value of the FD region of a given j-th zone is corrected using the value of the n-th FD region of the j-1-th zone in front of the j-th zone. However, the present invention is not restricted to such an arrangement. For example, the values of the FD regions of the j-th zone may be corrected using the values of the multiple FD regions of the j-1-th zone. For example, the correction may be executed using the average values of the n-th and n-1-th FD region values of the j-1-th zone.

### USAGE

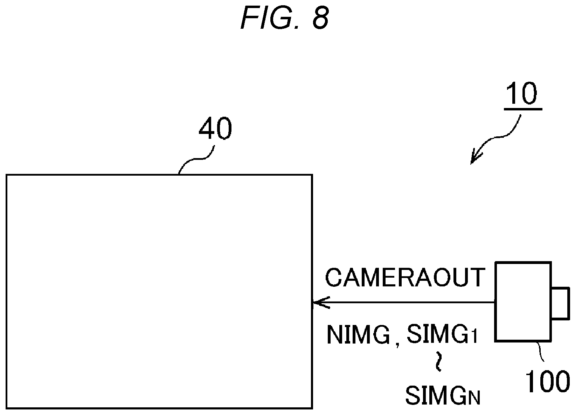

Fig. 8 is a block diagram showing the sensing system 10. The sensing system 10 includes a processing device 40 in addition to the ToF imaging camera 100 described above. The sensing system 10 is configured as an object detection system mounted on a vehicle such as an automobile, motorcycle, or the like. The sensing system 10 determines the type (category or class) of objects OBJ existing around the vehicle.

The ToF imaging camera 100 generates multiple range images SIMG₁ through SIMG_{N} that correspond to the multiple ranges RNG₁ through RNG_{N}. The output-data CAMERAOUT of the ToF imaging camera 100 includes either or both of a plurality of range images SIMG₁ through SIMG_{N} and a normal image NIMG.

The processing device 40 is configured to be capable of identifying the type of an object based on the output data CAMERAOUT of the ToF imaging camera 100.

The functions of the processing device 40 may be realized by software processing. Also, the function of the processing device 40 may be realized by hardware processing, or by a combination of software processing and hardware processing. Specifically, the software processing is implemented as a combination of a processor (hardware component) such as a CPU (Central Processing Unit), MPU (Micro Processing Unit), microcontroller, or the like, and a software program to be executed by the processor (hardware component). It should be noted that the processing device 40 may be configured as a combination of multiple processors and software programs. Specifically, the hardware process is implemented by hardware such as an ASIC (Application Specific Integrated Circuit), controller IC, FPGA (Field Programmable Gate Array), or the like. The functions of the processing device 40 and the processing device 140 may be provided as the same processor.

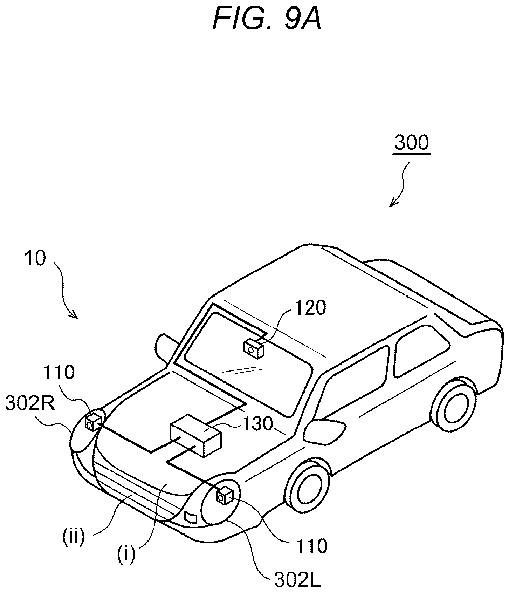

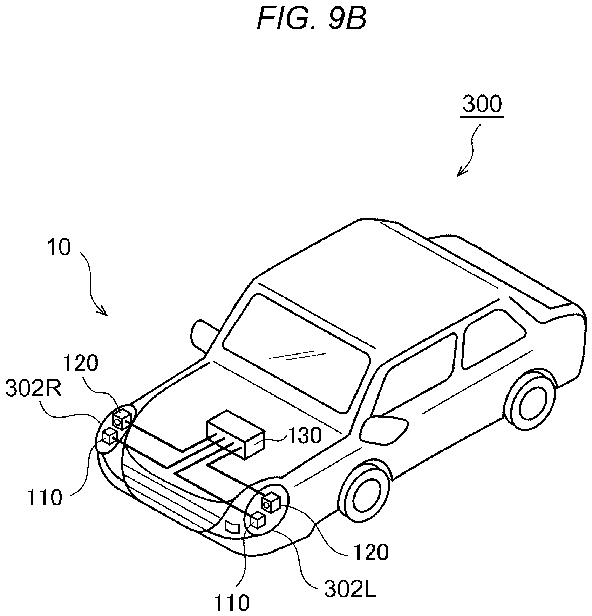

Figs. 9A and 9B are diagrams showing an automobile 300 provided with the ToF imaging camera 100. Referring to Fig. 9A, the automobile 300 shown in Fig. 11A includes a single illumination apparatus 22 at a central position of the vehicle.

As shown in Fig. 9A, the illumination apparatus 110 of the ToF imaging camera 100 may be built into at least one from among the left and right headlamps 302L, 302R. The image sensor 120 may be mounted on a part of a vehicle, for example, on the back side of a rear-view mirror. Alternatively, the image sensor 120 may be provided to a front grille or a front bumper. The camera controller 130 may be provided in an interior of the vehicle or an engine compartment. In addition, the camera controller 130 may be built into the headlamps 302L, 302R.

As shown in Fig. 9B, the image sensor 120 may be built into any one of the left and right headlamps 302L, 302R together with the illumination apparatus 110.

In addition, the illumination apparatus 110 may be provided as a part of the vehicle, for example, on a back side of a rear-view mirror, a front grille, or a front bumper.

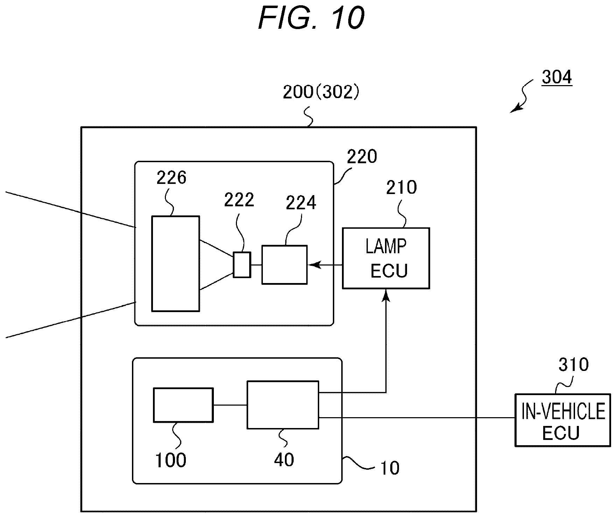

Fig. 10 is a block diagram showing a vehicle lamp 200 provided with the sensing system 10. The vehicle lamp 200 forms a lamp system 304 together with an in-vehicle ECU 310. The vehicle lamp 200 includes a lamp ECU 210 and a lamp unit 220. The lamp unit 220 is configured as a low beam unit or a high beam unit. The lamp unit 220 includes a light source 222, a lighting circuit 224, and an optical system 226. Furthermore, the vehicle lamp 200 includes the sensing system 10.

The information with respect to the object OBJ detected by the sensing system 10 may be used to support the light distribution control operation of the vehicle lamp 200. Specifically, the lamp ECU 210 generates a suitable light distribution pattern based on the information with respect to the type of the object OBJ and the position thereof generated by the sensing system 10. The lighting circuit 224 and the optical system 226 operate so as to provide the light distribution pattern generated by the lamp ECU 210. The processing device 40 of the sensing system 10 may be provided outside the vehicle lamp 200, i.e., on the vehicle side.

In addition, the information with respect to the object OBJ detected by the sensing system 10 may be transmitted to the in-vehicle ECU 310. The in-vehicle ECU 310 may use the information for self-driving or driving support.

The embodiments have been described for exemplary purposes only. It will be understood by those skilled in this art that various modifications may be made to the combinations of the respective components and the respective processing processes. Also, it is to be understood by those skilled in the art that such modifications are included within the scope of the present disclosure or the present invention.

The present application is based on Japanese Patent Application No. 2022-081841, filed on May 18, 2022, the contents of which are incorporated herein by reference.

## Claims

1. A ToF imaging camera configured to divide a field of view in a depth direction into multiple ranges, and to generate multiple range images that correspond to the multiple ranges, the ToF imaging camera comprising:
an illumination apparatus configured to emit pulsed illumination light to the field of view;
a multi-tap image sensor having n (n ≥ 2) FD (Floating Diffusion) regions for each pixel and being capable of exposure at different timings for each FD region;
a camera controller configured to control a light emission timing of the illumination apparatus and an exposure timing of the image sensor; and
a processing device configured to generate multiple range images based on an output of the image sensor,
wherein the camera controller controls the illumination apparatus and the image sensor so as to: (i) sense m (m ≥ 2) zones in the order from the near side to the far side in units of one zone including n consecutive ranges; and (ii) in the sensing of each zone, expose the i-th (1 ≤ i ≤ n) FD region of the image sensor with reflected light from the i-th range of this zone, and
wherein the processing device corrects pixel values of the i-th (1 ≤ i ≤ n) FD region of the j-th (2 ≤ j ≤ m) zone using an information acquired in the j-1-th zone, and generates a range image for the i-th range of the j-th zone.

2. The ToF imaging camera according to claim 1, wherein the processing device generates a range image for the i-th range of the j-th zone by subtracting the pixel value of the n-th FD region of the j-1-th zone from the pixel value of the i-th (1 ≤ i ≤) FD region of the j-th zone.

3. The ToF imaging camera according to claim 1 or 2, wherein the processing device combines the n × m range images so as to generate a single combined image.

4. The ToF imaging camera according to claim 3, wherein each pixel of the combined image is generated based on a maximum value from among the corresponding pixels of the n × m range images.

5. The ToF imaging camera according to claim 1 or 2, wherein, in a situation in which there is no fog, the processing device does not correct the pixel value of the i-th (1 ≤ i ≤) FD region of the j-th (2 ≤ j ≤ m) zone.

6. The ToF imaging camera according to claim 1 or 2, which is mounted on a vehicle.

7. A vehicle sensing system comprising the ToF imaging camera according to claim 1 or 2.

8. A vehicle lamp comprising the ToF imaging camera according to claim 1 or 2.
